# EUROPÄISCHE PATENTSCHRIFT

(11) **EP 0 588 193 B1**
(45) Veröffentlichungstag und Bekanntmachung des Hinweises auf die Patenterteilung: **07.02.1996**
(21) Anmeldenummer: 93114227.7
(22) Anmeldetag: 06.09.1993
(51) Int. Cl.: B60T 13/66

(54) **Verfahren zum Ermitteln des Anlegedruckes einer Bremseinrichtung für Fahrzeuge**
Method of determining the pressure at the end of dead travel in the actuator of a vehicle brake system
Méthode pour déterminer la pression appliquée lors du commencement de freinage dans un système de freinage pour véhicule

(30) Priorität: 16.09.1992 DE 4230911
(43) Veröffentlichungstag der Anmeldung: 23.03.1994
(73) Patentinhaber: ROBERT BOSCH GMBH, D-70442 Stuttgart (DE)
(72) Erfinder: Stumpe, Werner, D-70374 Stuttgart (DE); Wrede, Juergen, D-70378 Stuttgart (DE); Klein, Guenter, D-73277 Owen (DE)

(56) Entgegenhaltungen:
- EP-A- 0 189 076
- DE-A- 3 212 930

## Beschreibung

### Stand der Technik

Die Erfindung betrifft ein Verfahren zum Ermitteln des Anlegedrucks einer Bremseinrichtung für Fahrzeuge gemäß dem Patentanspruch 1 sowie gemäß Patentanspruch 2 eine Anordnung zur Durchführung eines derartigen Verfahrens.

Bei Bremsanlagen von Fahrzeugen mit mehreren Bremseinrichtungen ist es grundsätzlich unerwünscht, wenn die Bremswirkung an den Bremseinrichtungen nicht zum gleichen Zeitpunkt und mit unterschiedlichem Ausmaß einsetzt. Dies kann seine Ursache in unterschiedlicher Einstellung, Reibungsverlusten, Toleranzen usw. an den einzelnen Bremseinrichtungen haben. Unterschiedlicher Einsatz der Bremseinrichtungen beeinträchtigt die Fahrstabilität und das Verschleißverhalten von Reibungs-Bremseinrichtungen.

Bei einer aus DE 32 12 930 A1 bekannten Druckluft-Bremsanlage für Kraftfahrzeuge sind daher Maßnahmen getroffen, um diese Mängel auszugleichen: Zum einen wird bei einer Bremsbetätigung der an jeder Betätigungseinrichtung anliegende Druck sensiert, zum anderen wird die Bremswirkung überwacht. Unterschiedliche Bremswirkung wird mit Hilfe einer Steuerelektronik durch entsprechende Aussteuerung des Druckes kompensiert. Die Sensierung der Bremswirkung an den einzelnen Bremseinrichtungen ist jedoch relativ aufwendig.

### Vorteile der Erfindung

Das erfindungsgemäße Verfahren nach Anspruch 1 hat den Vorteil, daß mit einfachen Maßnahmen der Druck in der Betätigungseinrichtung der Bremseinrichtung ermittelt wird, bei dem die Wirkung der Bremseinrichtung, z. B. bei einer Trommelbremse durch Anlegen der Bremsbeläge an die Bremstrommel einsetzt. Dabei wird der Gradientensprung im Weg- oder Drehwinkel-Zeit-Diagramm genutzt, der dadurch auftritt, daß bei einer Einsteuerung von Druck in eine Betätigungseinrichtung deren Übertragungsglieder zunächst einen relativ großen Weg oder Drehwinkel bis zum Anlegen der Bremsbeläge zurücklegen, mit danach weiter steigendem Druck aber nur noch einer sehr geringen Lageänderung unterworfen sind. Dabei weist im erwähnten Diagramm die Kennlinie der Bremseinrichtung nach den Anliegen der Bremsbeläge eine auffällige, starke Steigungsänderung auf, die beim erfindungsgemäßen Verfahren zum Erfassen des Anlegedrucks genutzt wird.

Die im Anspruch 2 gekennzeichnete erfindungsgemäße Anordnung zur Durchführung eines Verfahrens zum Ermitteln des Anlegedrucks einer Bremseinrichtung für Fahrzeuge zeichnet sich dadurch aus, daß außer einer entsprechenden Ausbildung der Steuerelektronik die Sensierung der Lage, wie Weg, Drehwinkel der Übertragungsglieder an zahlreichen Orten zwischen der Betätigungseinrichtung und der Bremseinrichtung erfolgen kann. Außerdem stehen hierfür funktionssichere Sensoren zur Verfügung. Drucksensoren sind ohnehin bei modernen, elektrisch gesteuerten Bremsanlagen vorhanden.

Mit den in den Ansprüchen 3 und 4 angegebenen Ausgestaltungen der erfindungsgemäßen Anordnung werden bevorzugte Sensierungsorte und Bauformen von Lagesensoren aufgezeigt.

### Zeichnung

Ausführungsbeispiele der Erfindung sind in der Zeichnung vereinfacht dargestellt und in der nachfolgenden Beschreibung näher erläutert. Es zeigen Figur 1 eine Anordnung einer Bremseinrichtung mit Sensoren für die Lage eines Übertragungsgliedes und den in eine Betätigungseinrichtung eingesteuerten Druck; Figur 2 ein Diagramm des Weg- oder Drehwinkel-Verlaufs eines Übertragungsgliedes über der Zeit; Figuren 3 und 4 Beispiele für die Lage- und Drehwinkelsensierung in einer Trommelbremse.

### Beschreibung der Ausführungsbeispiele

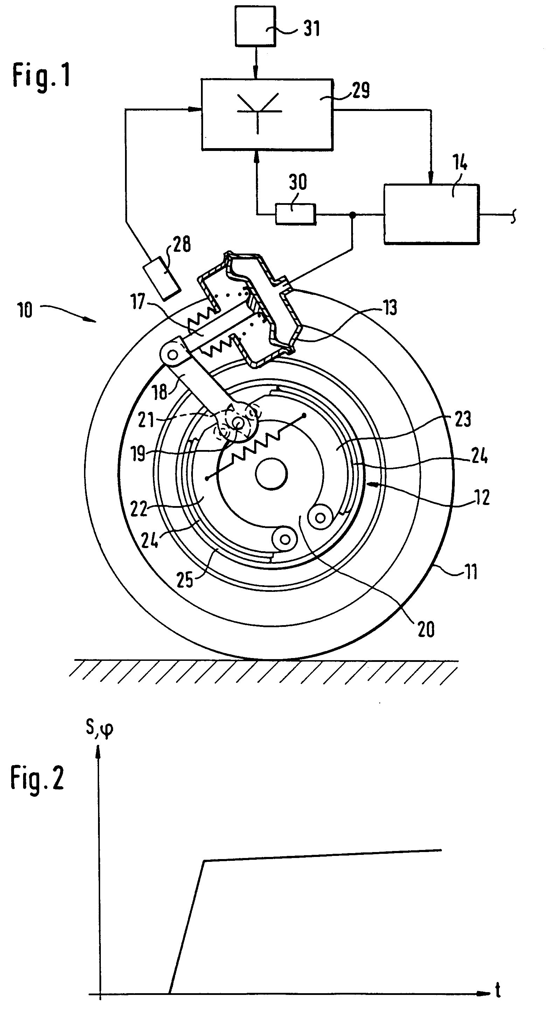

Das in Figur 1 dargestellte Ausführungsbeispiel gibt eine Bremseinrichtung 10 für Fahrzeuge mit einer am Fahrzeugrad 11 angeordneten Reibungsbremse in Form einer Trommelbremse 12 wieder. Die Trommelbremse 12 ist durch ein pneumatisches Betätigungsglied in Form eines Membranzylinders 13 betätigbar. Für die Einsteuerung von einem nicht dargestellten Druckluft-Vorratsbehälter entnommener Druckluft dient ein elektrisch betätigbares Drucksteuerventil 14.

Vom Membranzylinder 13 geht eine Kolbenstange 17 aus, welche an einem schwenkbaren Bremshebel 18 der Trommelbremse angreift. Der Bremshebel 18 ist drehfest mit einer Bremswelle 19 verbunden. Diese ist an einem Bremsschild 20 der Trommelbremse 12 drehbar gelagert und trägt einen S-förmigen Bremsnocken 21, welcher an zwei Bremsbacken 22 und 23 der Trommelbremse 12 angreift. Die Kolbenstange 17, der Bremshebel 18 mit Bremswelle 19 und Bremsnocken 21 sowie die Bremsbacken 22 und 23 stellen Übertragungsglieder einer vom Membranzylinder 13 erzeugten Bewegung für die Betätigung der Trommelbremse 12 dar. Die beiden Bremsbacken 22 und 23 tragen Bremsbeläge 24 für den innenseitigen Angriff an einer Bremstrommel 25 der Trommelbremse 12.

Zu der Bremseinrichtung 10 gehört ferner ein Lagesensor 28 für die Sensierung des Weges s oder des Drehwinkels φ, den eines der Übertragungsglieder bei einer Bremsbetätigung zurücklegt. Der Lagesensor 28 ist zur Abgabe elektrischer Lagesignale an eine Steuerelektronik 29 der Bremseinrichtung 10 bestimmt. Außerdem ist ein Drucksensor 30 zum Messen des in den Membranzylinder 13 eingesteuerten Drucks vorgesehen. Der Drucksensor 30 ist ebenfalls an die Steuerelektronik 29 angeschlossen. Die Steuerelektronik 29 vermag aufgrund von Steuerbefehlen eines Bremswertgebers 31 Steuersignale an das Drucksteuerventil 14 für die Drucksteuerung des Membranzylinders 13 abzugeben. Die Steuerelektronik 29 ist ferner zum Erfassen und Auswerten des zeitlichen Verlaufs des vom Lagesensor 28 abgegebenen Lagesignals (des Gradienten dieses Signals) und zum Erfassen des Drucksignalverlaufs ausgebildet. Außerdem ist die Steuerelektronik 29 zur Speicherung und Weiterverarbeitung der gemessenen Druckwerte und der Lagesignale bestimmt.

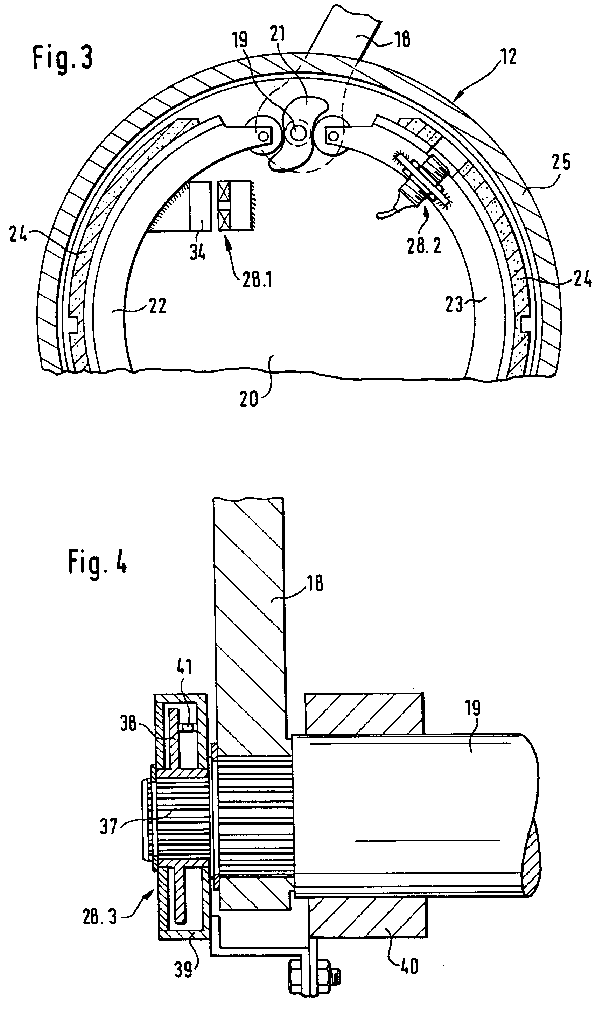

Mit einer derart ausgestatteten Bremseinrichtung 10 ist es in folgender Weise möglich, den Anlegedruck zu ermitteln:
Ausgelöst vom Bremswertgeber 31 oder im Rahmen eines Prüfablaufs steuert die Steuerelektronik 29 mittels des Drucksteuerventils 14 Druckluft vom Druck 0 ausgehend in den Membranzylinder 13 ein. Der eingesteuerte Druck wird fortlaufend vom Drucksensor 30 sensiert, das Drucksignal an die Steuerelektronik 29 übermittelt und gespeichert. Dabei wird in Abhängigkeit vom Ort der Wegsensierung oder der Drehwinkelsensierung an einem der Übertragungsglieder mittels des Lagesensors 28 während einer mehr oder weniger langen Totzeit (vergl. Figur 2) keine Bewegung des betreffenden sensierten Übertragungsgliedes festzustellen sein. Mit weiter steigendem Druck wird nach Überwinden von Haftreibung, Spiel, usw. innerhalb der Übertragungsglieder eine Bewegung des sensierten übertragungsgliedes stattfinden, die sich im Diagramm gemäß Figur 2 des (abstrahierten) Weg- oder Drehwinkel-Verlaufs über der Zeit durch einen relativ steilen Kennlinienanstieg auszeichnet. Mit dem am Ende des Anlegewegs oder Lüftwegs stattfindenden Anlegen der Bremsbeläge 24 an der Bremstrommel 25 bricht der steile Anstieg des Wegsignals S oder des Drehwinkelsignals φ ab und setzt sich im weiteren Zeitverlauf mit sehr geringer Steigung fort, welche überwiegend auf der Elastizität der Übertragungsglieder und der Trommelbremse 12 beruht. Die Steuerelektronik 29 wertet den zeitlichen Verlauf des Lagesignals Weg S bzw. Drehwinkel φ aus und erkennt den Gradientensprung, also das im Diagramm nach Figur 2 übertrieben abrupt dargestellte Übergehen des Kennlinienverlaufs vom steilen in den flachen Anstieg, aufgrund wenigstens eines Lagesignals vor dem, im und nach dem Gradientensprung. Der im Gradientensprung (Knick der Kennlinie) gemessene und gespeicherte Druckwert wird jetzt von der Steuerelektronik 29 ausgewählt. Der gemessene Druck ist der Anlegedruck der Bremseinrichtung 10. Der Anlegedruck wird in der Steuerelektronik 29 gespeichert und weiterverarbeitet. Dies kann beispielsweise darin bestehen, daß an mehreren Bremseinrichtungen eines Fahrzeugs der Anlegedruck ermittelt wird. Dieser Druck wird bei mehreren Bremseinrichtungen in unterschiedlicher Höhe liegen, mit der Folge, daß bei gleichzeitiger Auslösung einer Bremsbetätigung eine Bremseinrichtung mit niedrigem Anlegedruck früher zur Wirkung kommt als eine Bremseinrichtung mit hohem Anlegedruck. Eine alle Bremseinrichtungen übergreifende Steuerelektronik kann daher die Druckeinsteuerung in das jeweilige Betätigungsglied bremsspezifisch steuern, um die Bremsbeläge aller Bremseinrichtungen gleichzeitig zum Anliegen zu bringen.

Hierdurch wird der Bremsbelagverschleiß an allen Bremseinrichtungen vergleichmäßigt und beispielsweise bei gekuppelten Fahrzeugen die Abstimmung der Bremswirkung verbessert.

Beispiele für die Lagesensierung an einer Trommelbremse 12 sind in Figur 3 angegeben. In der linken Hälfte der Figur ist am Bremsschild 20 ein induktiver Lagesensor 28.1 befestigt, welcher mit einem an der Bremsbacke 22 befestigten Metallkörper 34 zusammenwirkt. Der Lagesensor 28.1 sensiert also den sich vergrößernden Abstand zwischen einem Punkt des Bremsschildes 20 bei der Anlegebewegung der Bremsbacke 22.

In der rechten Hälfte der Figur 3 ist ein induktiver Lagesensor 28.2 an der Bremsbacke 23 befestigt. Dieser Sensor 28.2 sensiert den sich beim Anliegen des Bremsbelags 24 verringernden Abstand zur Bremstrommel 25.

Das Beispiel gemäß Figur 4 zeigt einen Lagesensor 28.3, welcher als Drehpotentiometer ausgebildet ist und zum Messen des Drehwinkels von Bremshebel 18 oder Bremswelle 19 oder Bremsnocken 21 dient. Der Lagesensor 28.3 hat einen mit einem Wellenzapfen 37 der Bremswelle 19 drehfest verbundene Potentiometerscheibe 38 in einem Gehäuse 39. Dieses ist relativ zum Bremsschild 20 unverdrehbar an einem auf nicht dargestellte Weise mit dem Bremsschild fest verbundenen Wellenlager 40 verschraubt. Mit dem Gehäuse 39 ist ein mit der Potentiometerscheibe 38 zusammenwirkender Abgriff 41 verbunden.

## Patentansprüche

1. Verfahren zum Ermitteln des Anlegedrucks einer Bremseinrichtung für Fahrzeuge,
umfassend die Verfahrensschritte:
- Druckeinsteuerung in ein Betätigungsglied der Bremseinrichtung,
- Sensieren des eingesteuerten Drucks und Abgabe eines Drucksignals,
- Sensieren der Lageänderung eines von dem Betätigungsglied bewegten Übertragungsgliedes der Bremseinrichtung und Abgabe eines Lagesignals,
- Auswerten des zeitlichen Verlaufs des Lagesignals und des Drucksignals,
- Zuordnen des eingesteuerten Drucks beim Auftreten eines Gradientensprungs des Lagesignals,
- Speichern und Weiterverarbeiten des beim Gradientensprung gemessenen Druckwertes zum Erfassen des Anlegedrucks.

2. Anordnung zur Durchführung eines Verfahrens zum Ermitteln des Anlegedrucks einer Bremseinrichtung für Fahrzeuge, mit den folgenden Merkmalen:
- es ist eine Bremseinrichtung (10) mit einer Reibungsbremse (12) vorgesehen,
- die Bremseinrichtung (10) ist durch Druckeinsteuerung in ein Betätigungsglied (13) betätigbar,
- für die Messung des eingesteuerten Drucks ist ein Drucksensor (30) vorgesehen,
gekennzeichnet durch die weiteren Merkmale:
- einem vom dem Betätigungsglied (13) bewegbaren Übertragungsglied (17, 18, 19, 21, 22, 23) der Bremseinrichtung (10) ist ein Lagesensor (28) zugeordnet,
- es ist eine das Lagesignal des Lagesensors (28) und das Drucksignal des Drucksensors (30) empfangende Steuerelektronik (29) vorgesehen,
- die Steuerelektronik (29) ist zur Auswertung des zeitlichen Verlaufs des Lagesignals und des Drucksignals ausgebildet,
- die Steuerelektronik (29) ist zur Speicherung und Weiterverarbeitung des bei Auftreten eines Gradientensprungs des Lagesignals gemessenen Druckwertes zum Erfassen des Anlegedrucks ausgebildet.

3. Anordnung nach Anspruch 2, dadurch gekennzeichnet, daß der Lagesensor (28.1, 28.2) für die induktive Sensierung des Abstandes einer Bremsbacke (22, 23) einer Trommelbremse (12) gegenüber einer Bremstrommel (25) oder einem Punkt eines Bremsschildes (20) ausgebildet ist.

4. Anordnung nach Anspruch 2, dadurch gekennzeichnet, daß der Lagesensor (28.3) ein auf einer Bremswelle (19, 37) einer Trommelbremse (12) angeordnetes Drehpotentiometer für die Sensierung des Drehwinkels (φ) der Bremswelle oder eines mit der Bremswelle verbundenen Bremshebels (18) oder Bremsnockens (21) ist.

## Claims

1. Method of determining the application pressure of a brake device for vehicles, comprising the method steps:
- feeding in of pressure into an activation element of the brake device,
- sensing the fed-in pressure and outputting a pressure signal,
- sensing the change in position of a transmission element, moved by the activation element, of the brake device and outputting a position signal,
- evaluating the variation over time of the position signal and of the pressure signal,
- assigning the fed-in pressure when a jump in the gradient of the position signal occurs,
- storing and further processing the pressure value, measured at the jump in gradient, in order to detect the application pressure.

2. Arrangement for carrying out a method for determining the application pressure of a brake device for vehicles, having the following features:
- a brake device (10) is provided with a friction brake (12),
- the brake device (10) can be activated by feeding pressure into an activation element (13),
- a pressure sensor (30) is provided for measuring the fed-in pressure,
characterized by the following features:
- a transmission element (17, 18, 19, 21, 22, 23), which can be moved by the activation element (13), of the brake device (10) is assigned a position sensor (28),
- control electronics (29) which receive the position signal of the position sensor (28) and the pressure signal of the pressure sensor (30) are provided,
- the control electronics (29) are designed to evaluate the variation over time of the position signal and of the pressure signal,
- the control electronics (29) are designed to store and further process the pressure value, measured when a jump in the gradient of the position signal occurs, in order to detect the application pressure.

3. Arrangement according to Claim 2, characterized in that the position sensor (28.1, 28.2) is designed to sense inductively the distance between a brake block (22, 23) of a drum brake (12) and a brake drum (25) or a point on a brake support plate (20).

4. Arrangement according to Claim 2, characterized in that the position sensor (28.3) is a rotary potentiometer, arranged on a brake shaft (19, 37) of a drum brake (12), for sensing the rotational angle (φ) of the brake shaft or of a brake lever (18) or brake cam (21) connected to the brake shaft.

## Revendications

1. Procédé pour déterminer la pression d'application d'une installation de frein de véhicule, comprenant les étapes suivantes,
- commande de la pression d'un organe de manoeuvre d'une installation de frein,
- détection de la pression commandée et émission d'un signal de pression,
- détection de la variation de position d'un élément de transmission d'une installation de frein, déplacée par l'élément de manoeuvre et émission d'un signal de position,
- l'exploitation de la courbe chronologique du signal de position et du signal de pression,
- association de la pression commandée à l'arrivée du saut de gradient du signal de position,
- enregistrement et poursuite du traitement de la valeur de la pression mesurée au niveau du saut du gradient pour détecter la pression d'application.

2. Dispositif pour la mise en oeuvre d'un procédé pour déterminer la pression d'application d'une installation de frein de véhicule ayant les caractéristiques suivantes :
- une installation de frein (10) avec un frein à friction (12),
- l'installation de frein (10) est actionnée par la pression commandée dans un organe de manoeuvre 13,
- un capteur de pression (30) pour mesurer la pression commandée,
caractérisé par les caractéristiques suivantes :
- un organe de transmission (17, 18, 19, 21, 22, 23) de l'installation de frein (10) susceptible de déplacer l'organe de manoeuvre (13) est équipé d'un capteur de position (28),
- une électronique de commande (29) reçoit le signal de position du capteur de position (28) et le signal de pression du capteur de pression (30),
- l'électronique de commande (29) est conçue pour exploiter la courbe chronologique du signal de position et du signal de pression,
- l'électronique de commande (29) enregistre et traite la valeur de la pression mesurée à l'arrivée d'un saut de gradient du signal de position pour détecter la pression d'application.

3. Dispositif selon la revendication 2, caractérisé en ce que le capteur de position (28.1, 28.2) est conçu pour la détection inductive de la distance entre une mâchoire de frein (22, 23) d'un frein à tambour (12) et d'un tambour (25) ou d'un point d'une platine de frein (20).

4. Dispositif selon la revendication 2, caractérisé en ce que le capteur de position (28.3) est un potentiomètre rotatif prévu sur l'axe de frein (19, 37) d'un frein à tambour (12) pour détecter l'angle de rotation (φ) de l'axe de frein ou d'un levier de frein (18) ou d'une came de frein (20) reliés à l'axe de frein.
